Europäisches Patentamt

European Patent Office

Office européen des brevets

(19)

(11) Veröffentlichungsnummer: **0 359 910**
**A2**

(12) **EUROPÄISCHE PATENTANMELDUNG**

(21) Anmeldenummer: **89110552.0**

(22) Anmeldetag: **10.06.89**

(51) Int. Cl.⁵ **B62D 33/08** , **B60P 3/34**

(30) Priorität: **19.08.88 DE 3828184**

(43) Veröffentlichungstag der Anmeldung:
**28.03.90 Patentblatt 90/13**

(84) Benannte Vertragsstaaten:
**AT BE CH DE ES FR GB GR IT LI NL SE**

(71) Anmelder: **Vater, Tobias**
**Heschmattweg 30**
**D-7570 Baden-Baden(DE)**

Anmelder: **Bayer, Gerhard**
**Hauptstrasse 2**
**D-7570 Baden-Baden(DE)**

(72) Erfinder: **Vater, Tobias**
**Heschmattweg 30**
**D-7570 Baden-Baden(DE)**
Erfinder: **Bayer, Gerhard**
**Hauptstrasse 2**
**D-7570 Baden-Baden(DE)**

(74) Vertreter: **Zipse & Habersack**
**Lessingstrasse 12**
**D-7570 Baden-Baden(DE)**

(54) **Karosserieanordnung für ein Kraftfahrzeug oder einen Anhänger.**

(57) Die Erfindung betrifft eine Karosserieanordnung für ein Kraftfahrzeug oder einen Anhänger, bei welcher der Aufbau aus einem oberen und einem unteren Teil besteht, wobei der obere Teil über den unteren Teil absenk- und anhebbar ist. Die Karosserieanordnung ist dadurch gekennzeichnet, daß vorzugsweise im unteren Teil (5) des Aufbaus (3) zum Anheben und Absenken des oberen Teiles (4) ein Motor mit Getriebe (22) angeordnet ist, der über ein Zahnrad eine Kette (23) in zwei Richtungen antreibt, wobei die Enden der Kette mit Seilzügen (24, 25, 27, 28) verbunden sind, die über Umlenkrollen mit dem oberen Teil (4) an der Decke und an den unteren Kanten verbunden sind, wobei im Bereich der unteren Kanten des oberen Teiles (4) nach innen gerichtete, veränderbare Abdichtungen (20) vorgesehen sind.

Fig 5a

## Karosserieanordnung für ein Kraftfahrzeug oder einen Anhänger

Die Erfindung betrifft eine Karosserieanordnung für ein Kraftfahrzeug oder einen Anhänger, wie z. B. für einen LKW, einen Transporter, einen Sattelschlepper, einen PKW, einen Container od. dgl., bestehend aus einem im wesentlichen rechteckförmigen Aufbau mit zwei Seitenwänden, zwei Stirnwänden, von denen eine aus zwei Türen bestehen kann, und einem Dach.

Bei Fahrzeugen der genannten Art nimmt der Aufbau einer Karosserieanordnung im nicht- oder teilbeladenen Zustand verhältnismäßig viel Raum in Anspruch, wodurch Nachteile bezüglich des Luftwiderstandes und damit des Kraftstoffverbrauches entstehen.

In der US-A-2 879 103 ist ein Kraftfahrzeug beschrieben, bei welchem der hintere Aufbau der Karosserie durch ein Teleskopgestänge anheb- und absenkbar ist, um das Volumen des Aufbaus während der Fahrzeit zu verkleinern

Eine ähnliche Ausführungsform wird auch in der GB-A-928 460 beschrieben.

Die US-A-3 061 358 beschreibt ebenfalls ein Kraftfahrzeug mit einem Karosserieaufbau, dessen oberer Teil anheb- und absenkbar ist, wobei hierzu im wesentlichen Zahnstangen und Zahnräder benutzt werden.

Eine gleiche Anordnung beschreibt auch die US-A-4 392 682, wo mittels Kegelrädern und Gewindestanden der obere Teil einer Anhängerkarosserie anheb- und absenkbar ist.

In der DE-A-31 50 707 ist eine Einrichtung zur Höhenverstellung von Fahrzeugaufbauten beschrieben, bei welcher Verstellstützen mittels Gasfedern betätigt werden, wobei auch eine Betätigungseinrichtung vorhanden ist, die aus einer Seilwinde mit Zugseilen besteht und deren Zugkraft die Verstellstützen gegen die Wirkung der Gasfedern nach unten bewegt.

Sämtliche vorbekannten Karosserieanordnungen weisen jedoch den Nachteil auf, daß der Antriebsmechanismus zu kompliziert im Aufbau und daher zu teuer ist. Der Antriebsmechanismus gemäß der letztgenannten DE-A- weist zwar bereits Zugseile für die Betätigungseinrichtung auf, jedoch wirken diese Zugseile nur gegen die Wirkung von Gasfedern, die ebenfalls verhältnismäßig teuer und gegebenenfalls wartungsanfällig sind.

Der vorliegenden Erfindung liegt die Aufgabe zugrunde, die Nachteile der vorgenannten Karosserieanordnungen zu beheben und die Ausbildung der Betätigungseinrichtung des oberen, anheb- und absenkbaren Karosserieteiles zu verbessern und wesentlich zu vereinfachen, wobei die Reibung zwischen den sich bewegenden Teilen während der Be wegung vermindert wird, ohne daß die Dichtheit im jeweiligen Endruhezustand, auch bei Vorhandensein von rückseitig angeordneten Flügeltüren, gewährleistet ist.

Zur Lösung der gestellten Aufgabe wird eine Karosserieanordnung für ein Kraftfahrzeug oder einen Anhänger, wie z. B. für einen LKW, einen Transporter, einen Sattelschlepper, einen PKW, einen Container od. dgl., bestehend aus einem im wesentlichen rechteckförmigen Aufbau mit zwei Seitenwänden, zwei Stirnwänden, von denen eine aus zwei Türen bestehen kann, und einem Dach, wobei der den Transport- oder Laderaum umschließende bzw. bestimmende Aufbau im nicht- oder teilbeladenen Zustand des Fahrzeuges zur Verkleinerung seiner Höhe horizontal und zweiteilig und schachtelförmig derart ausgebildet ist, daß der obere Teil über oder in den unteren Teil mittels einer aus Seilzügen bestehenden Hebeeinrichtung teleskopartig absenk- und anhebbar ist, vorgeschlagen, welche dadurch gekennzeichnet ist, daß vorzugsweise im unteren Teil des Aufbaues zum Anheben und Absenken des oberen Teiles ein Motor mit Getriebe angeordnet ist, der über ein Zahnrad eine Kette in zwei Richtungen antreibt, wobei die Enden der Kette mit Seilzügen verbunden sind, die über Umlenkrollen mit dem oberen Teil an der Decke und an den unteren Kanten verbunden sind.

Mit dem erfindungsgemäßen Antrieb wirkt ein Elektromotor auf eine längs einer Stirnwand am Boden verlaufende, gespannte Kette ein. Der Antrieb des Motors ist so gestaltet, daß die Kette auf ihrer Länge in einer und in die andere Richtung bewegt werden kann. Am bodenseitigen Ende sind die vier Seilzüge befestigt, die über Umlenkrollen jeweils zu den unteren Ecken des Oberteiles verlaufen, wo sie befestigt sind. Am oberen Ende der Kette sind ebenfalls vier Seilzüge vorgesehen, die über Umlenkrollen zu den oberen Kanten des Oberteiles führen. Dadurch wird der wesentliche Vorteil erreicht, daß nicht nur eine einwandfreie Verspannung des Oberteiles in jeder Lage erfolgt, so daß durch die stabile Lage eine Kipp- oder Kantenneigung des Teiles verhindert wird, sondern durch die Zwangsführung der Seile wird auch ein sicheres und problemloses Anheben und Absenken des Oberteiles bewirkt.

Außerdem wird durch nach innen gerichtete Gummidichtungen, die in ihrem Volumen veränderbar sind, erreicht, daß während des Bewegens keine Reibung zwischen dem oberen und unteren Teil eintritt und nur im Endzustand eine vollständige Dichtung zwischen den beiden Teilen hergestellt wird.

Wertvolle Ausführungsformen der Karosserieanordnung gemäß der Erfindung sind in den Unteransprüchen dargestellt.

So sind gemäß Anspruch 2 zwei Türen der hinteren Stirnwand des Aufbaus entsprechend in obere und untere Flügel unterteilt, und an seitlichen Führungen sind die oberen Flügel über oder hinter die unteren Flügel absenkbar, wobei jeder Flügel zwei Scharniere aufweist und zum Absenken und Anheben der oberen Flügel das untere Scharnier des oberen Flügels unter dem oberen Scharnier des unteren Flügels angeordnet ist und wobei jeweils zwei gegenüberliegende Flügel durch eine Führungsschiene miteinander verbunden sind.

Auch diese Türenanordnung trägt zur Verbesserung des Anhebens und Absenkens der Karosserieanordnung gemäß der Erfindung bei.

Die Unteransprüche 3, 4 und 5 beziehen sich auf eine zwangsführte Seilzugführung unter Verwendung von Bowdenzügen.

So sind gemäß Anspruch 3 an den Enden der über ein Kettenritzel motorisch angetriebenen Kette Bowdenzüge angeordnet, die zu vier Eckpfosten oder derartigen Versteifungseinrichtungen des Karosserieoberteiles führen, wobei die Seele jeweils eines Bowdenzuges nach oben zur Befestigung im Deckenbereich des Oberteiles geführt ist und die Seele des anderen Bowdenzuges über je eine Umlenkrolle im unteren Bereich des oberen Teiles befestigt ist.

Gemäß einer besonderen Ausführungsform sind nach Anspruch 4 an einer Befestigungsvorrichtung, beispielsweise einer Platte in oder unter dem Boden des Laderaumes, die Mäntel von vier mal zwei Bowdenzügen befestigt, deren Seelen acht in der Platte vorgesehene Bohrungen durchdringen, wobei die Enden der Seelen von je zwei miteinander kooperierenden Bowdenzügen an je einem Querträger befestigt sind, welche an den Enden der motorisch angetriebenen und über das Antriebsritzel umgelenkten Kette befestigt sind.

Durch diese Anordnung ist es möglich, die Seelen, d. h. die Seile der Bowdenzüge, gleichmäßig innerhalb der Mäntel zu bewegen und so die oben angeführte Zwangsführung beim Anheben und Absenken des Oberteiles zu bewerkstelligen.

Um auch während des Anhebens und Absenkens die Dichtung, die ja Reibungsverluste hervorruft, auszuschalten, ist eine besondere Dichtung vorgesehen, die aus einem Hohlgummiprofil besteht, dessen Innenraum während des Anhebens oder Absenkens des Karosserieteiles evakuiert wird, wodurch die Dichtung nicht mehr an ihrer Auflage liegt. In der jeweiligen Endstellung wird der Hohlraum wieder belüftet, d. h. mit normalem Luftdruck beaufschlagt, so daß dann die Dichtung die beiden Karosserieteile sicher gegen Spritzwasser abdichtet. Auf diese Weise können die Reibungsverluste zwischen der Dichtung und den sich bewegenden Karosserieteilen aufgehoben werden, wodurch eine weitere Verbesserung im Hinblick auf das reibungslose Anheben und Absenken des Oberteiles erzielt wird.

Anhand der Zeichnungen soll am Beispiel bevorzugter Ausführungsformen die Karosserieanordnung gemäß der Erfindung näher erläutert werden.

In den Zeichnungen zeigen

die Fig. 1a, 1c, und 1e drei verschiedene Lastkraftfahrzeuge mit Kastenaufbau im abgesenkten Zustand in Seitenansicht.

Die Fig. 1b, 1d, 1f zeigen die entsprechenden Fahrzeuge mit Kastenaufbau in angehobenem Zustand in Seitenansicht.

Fig. 2a zeigt einen Personenkraftwagen mit Anhänger und Kastenaufbau im abgesenkten Zustand in Seitenansicht.

Fig. 2b zeigt die gleiche Anordnung wie in Fig. 2a mit Kastenaufbau im angehobenen Zustand.

Fig. 3a zeigt im Prinzip die linke Türseite eines Aufbaus im ausgefahrenen Zustand.

Fig. 3b zeigt die linke Türseite eines Aufbaus im abgesenkten Zustand.

Fig. 3c zeigt eine Draufsicht der Anordnung von Fig. 3a.

Fig. 4a zeigt im Prinzip eine Ansicht auf einen Kastenaufbau von hinten.

Die Fig. 4b und 4c zeigen eine seitliche Prinzipansicht des Kastenaufbaus mit Führungsschiene.

Die Fig. 5a und 5b zeigen in perspektivischer Ansicht sowie in rückseitiger Ansicht eine Seilzugführung zum Absenken und Anheben des oberen Aufbauteiles.

Fig. 6 zeigt in Prinzipdarstellung in perspetivischer Ansicht die aus Seilzügen bestehende Hebeeinrichtung mit der Karosserieanordnung gemäß der Erfindung.

Fig. 7 zeigt einen Schnitt durch die Karosserieanordnung gemäß der Erfindung.

Die Fig. 7a und 7b zeigen Teilansichten der Gummiabdichtung zwischen den Karosserieteilen im Schnitt.

Fig. 8 zeigt eine Teilansicht der Seelen von zwei Bowdenzügen.

Fig. 9 zeigt eine vergrößerte Darstellung von Fig. 8.

Fig. 10 zeigt eine Draufsicht auf die in Fig. 9 dargestellte Umlenkrolle.

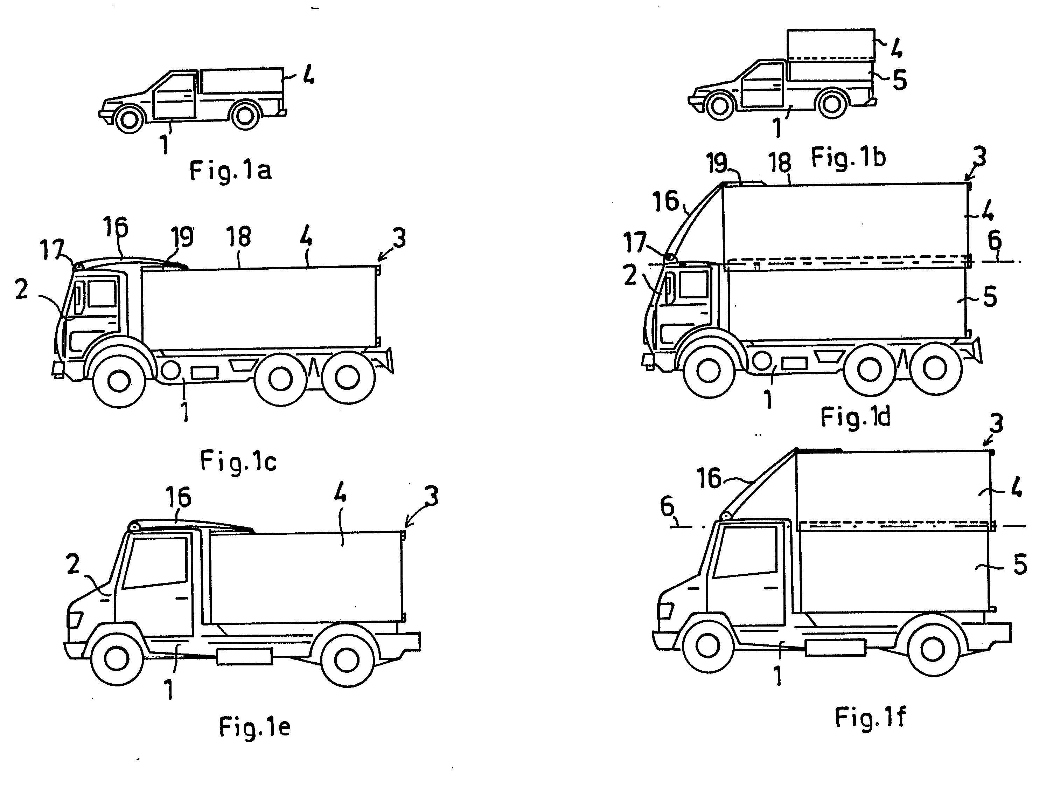

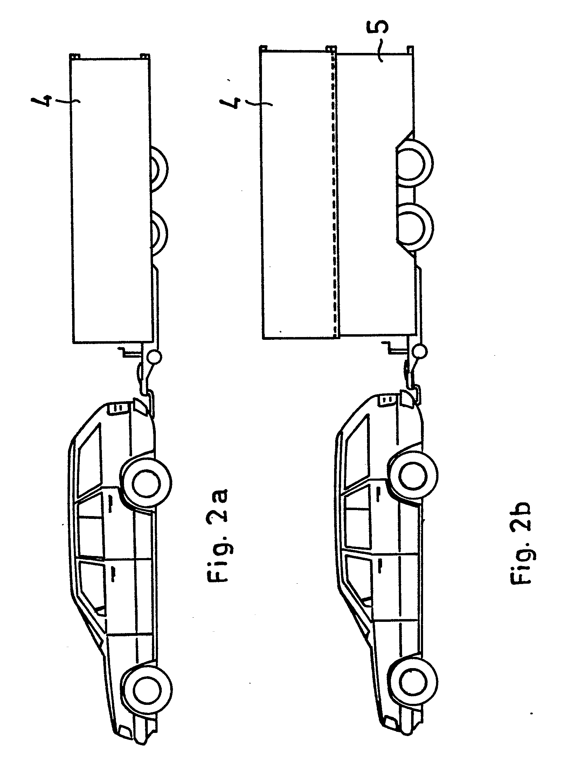

In den Fig. 1a bis 1f ist bei einem Kleintransporter bzw. LKW auf dem Fahrgestell 1 ein Führerhaus 2 und ein im wesentlichen rechteckförmiger Aufbau 3 mit zwei Seitenwänden, zwei Stirnwänden und einem Dach dargestellt. Dieser den Transport- oder Laderaum umschließende bzw. bestimmende Aufbau 3 besteht aus einem oberen Teil 4 und einem unteren Teil 5, wobei dieser Aufbau im nicht- oder teilbeladenen Zustand des Fahrzeuges zur Verkleinerung seiner Höhe mindestens zweiteilig horizontal und schachtelförmig derart ausgebildet ist, daß der obere Teil 4 über oder in den unteren Teil mittels einer Hebeeinrichtung teleskopartig absenk- und anhebbar ist. In den Fig. 1a, 1c, und 1e ist der obere Teil 4 des Aufbaus vollständig auf den unteren Teil 5 des Aufbaus abgesenkt. Dies gilt auch für einen Anhänger, dargestellt in den Fig. 2a, 2b.

Der Aufbau 3 ist somit längs einer gestrichelt dargestellten Mantellinie 6 und einer entsprechenden horizontalen Fläche geteilt, wobei der obere Aufbauteil 4 zur Absenkung über dem unteren Aufbauteil 5 einen entsprechend größeren Grundriß besitzt.

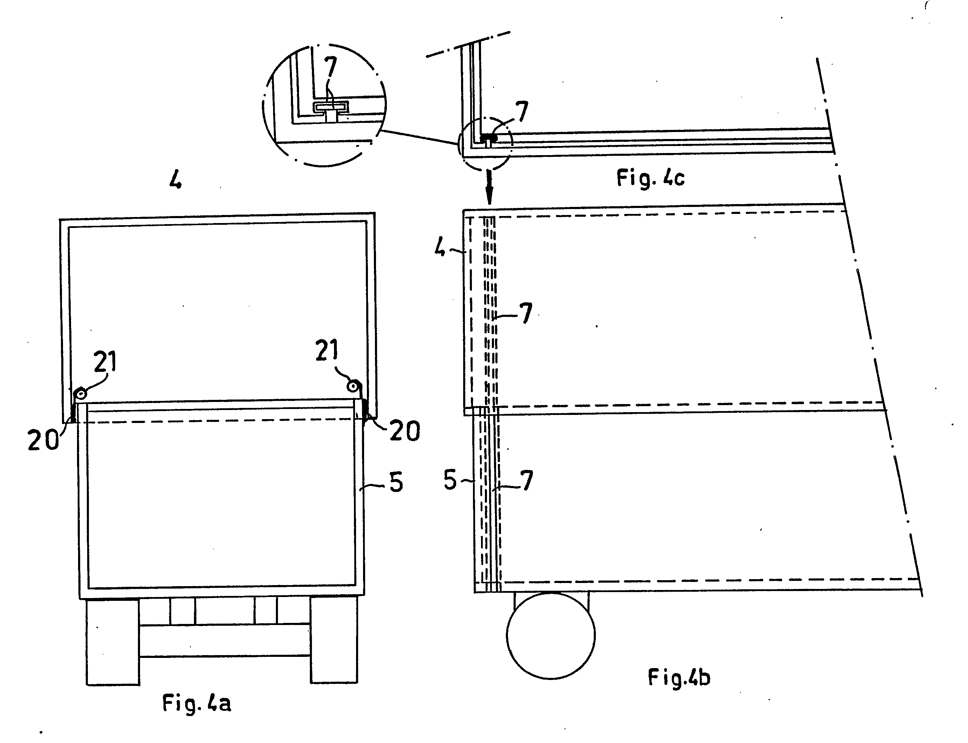

Wie sich aus den Fig. 4a bis 4c ergibt, sind unterhalb des Aufbaus Führungsschienen 7 angeordnet, welche die beiden Teile miteinander verbinden, so daß längs dieser Schienen der obere Teil mit seinen Schienen in entsprechenden Schienen des unteren Teiles gleitend verschoben werden kann.

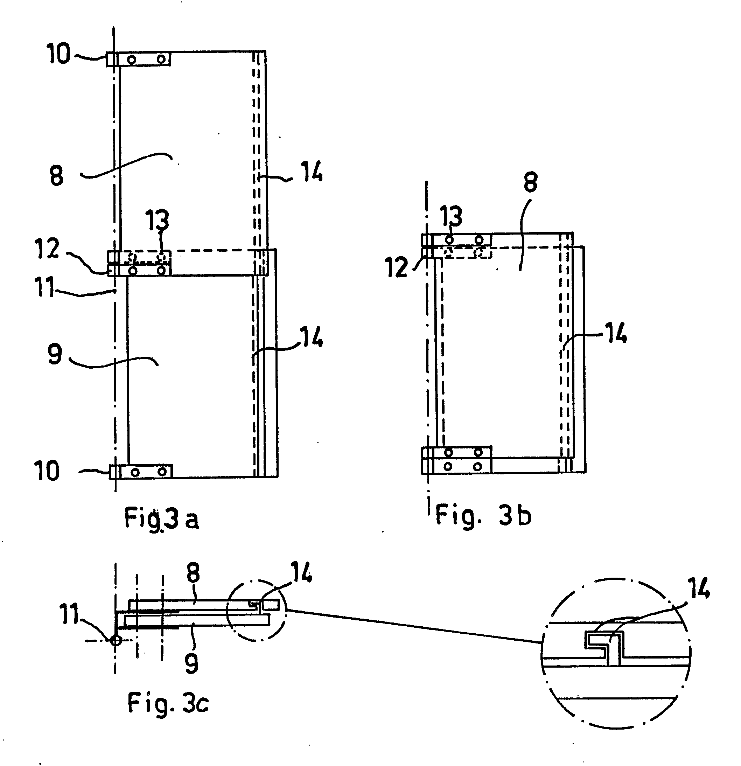

Wie sich aus den Fig. 3a bis 3c ergibt, sind an der hinteren Stirnwand eines kastenförmigen Aufbaus zwei Türen vorgesehen, von denen jeweils nur die linke dargestellt ist. Diese Türen sind in zwei Flügel 8 und 9 unterteilt, wobei der obere Flügel 8 über den unteren Flügel 9 beim Absenken des oberen Aufbauteils 4 auf den unteren Aufbauteil 5 absenkbar ist. Zu diesem Zweck ist eine gekröpfte Scharnieranordnung 10 vorhanden, wobei in der Achse 11 der Drehpunkt der Scharniere fluchtet. Die Scharniere sind erforderlich, um eine stabile Türaufhängung zu gewährleisten, wobei das untere Scharnier 12 des oberen Flügels 8 unter dem oberen Scharnier 13 des unteren Flügels 9 angeordnet ist. Dadurch ist ein ungehindertes Anheben bzw. Absenken des oberen Aufbauteils und damit der Türen möglich.

Die oberen und unteren Flügel 8, 9 können durch Führungsschienen 14 od. dgl. miteinander verbunden sein. Die obere Führungsschiene 15 des oberen Flügels greift in die untere Führungsschiene 14 des unteren Flügels ein, so daß eine seitliche Verschränkung des oberen Flügels 8 zum unteren Flügel 9 verhindert wird.

Wie sich aus Fig. 1c bis 1f ergibt, ist der aerodynamische Spoiler 16 durch ein Gelenk 17 mit dem Dach 18 des Führerhauses 2 verbunden. Dieser Spoiler 16 wird in zwei Schienen 19, die auf dem Dach des Aufbaus angeordnet sind, geführt. Dadurch kann sich der Spoiler der jeweiligen Höhe des oberen Teiles 4 des Aufbaus anpassen.

Wie sich ferner aus Fig. 4a ergibt, kann zwischen dem oberen und unteren Teil 4 bzw. 5 des Aufbaus eine Abdichtung 20 vorgesehen sein, um das Eindringen von Staub und Spritzwasser in den Innenraum zu verhindern.

Um eine Sicherheit, beispielsweise beim Ausfall der Hebeeinrichtung, zu gewährleisten, kann ferner an den vier gegenüberliegenden Ecken, oder auch dazwischen, eine Sicherheitseinrichtung 21 vorgesehen sein, die beispielsweise aus einer selbsthemmenden Verriegelung, wie sie beispielsweise bei Sicherheitsgurten in Kraftfahrzeugen bekanntgeworden ist, bestehen kann. Sollte die Hebeeinrichtung einmal durch Bruch ausfallen, so verhindert diese Sicherheitseinrichtung das Abfallen des oberen Teiles 4 des Aufbaus.

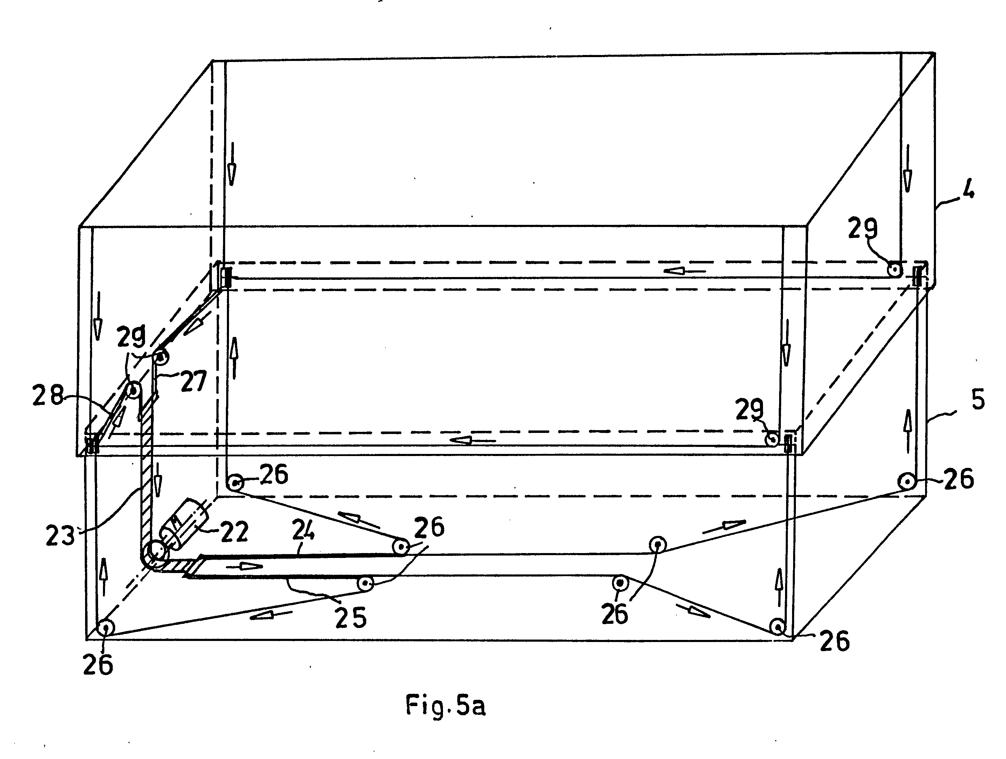

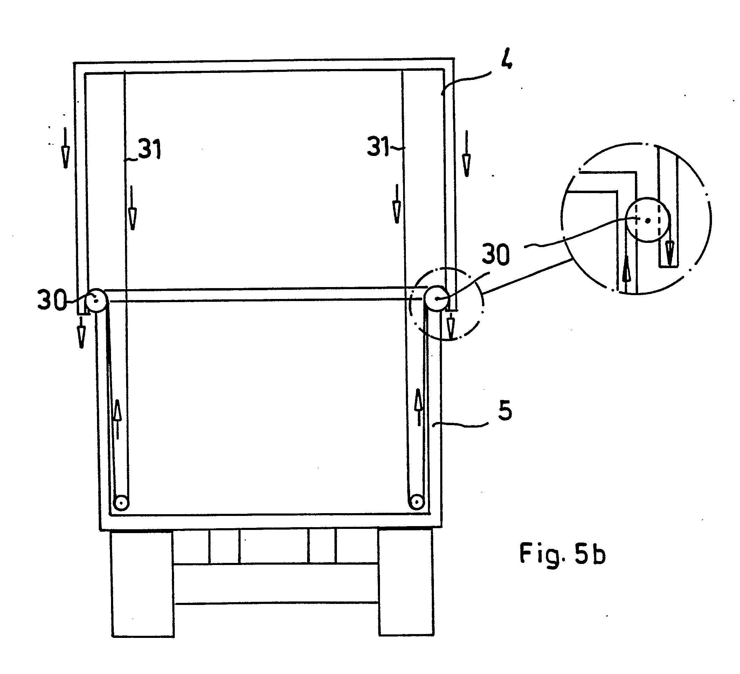

In den Fig. 5a, 5b ist die Seilzuganordnung zum Anheben und Absenken des oberen Teiles 4 des Aufbaus dargestellt. Diese Anordnung besteht im wesentlichen aus einem Elektromotor 22 mit einem Getriebe und einem Zahnrad, welches auf eine längs einer Stirnwand und am Boden verlaufende und gespannte Kette 23 einwirkt. Der Antrieb des Motors 22 ist so gestaltet, daß die Kette 23 auf ihrer Länge nach vorne und zurück bewegt werden kann. Am bodenseitgen Ende der Kette 23 sind je zwei Seilzüge 24, 25 befestigt, die über Umlenkrollen 26 jeweils zu den unteren Ecken des Oberteiles 4 entsprechend der Pfeile verlaufen, wo sie befestigt sind.

Am oberen Ende der Kette 23 sind ebenfalls je zwei Seilzüge 27, 28 vorgesehen, die über Umlenkrollen 29 zu den oberen Kanten des Oberteiles 4 führen.

Dadurch ergibt sich eine einwandfreie Verspannung des Oberteiles in jeder Lage, so daß durch die stabile Lage eine Kipp- oder Kantenneigung dieses Teiles verhindert wird.

Zum Absenken oder Anheben des Oberteiles 4 wird der Motor 22 in entsprechende Umdrehungsrichtung versetzt, wodurch, entsprechend dem dargestellten Verlauf der Seilzüge, ein Absenken und Anheben dieses Teiles ermöglicht wird.

In Fig. 5b ist eine Seilverspannung dargestellt, bei welcher die Seilzüge 31 über zu beiden Seiten angebrachte Umlenkrollen 30 von der Oberseite des Oberteiles 4 zu den unteren Kanten des Oberteiles 4 verlaufen.

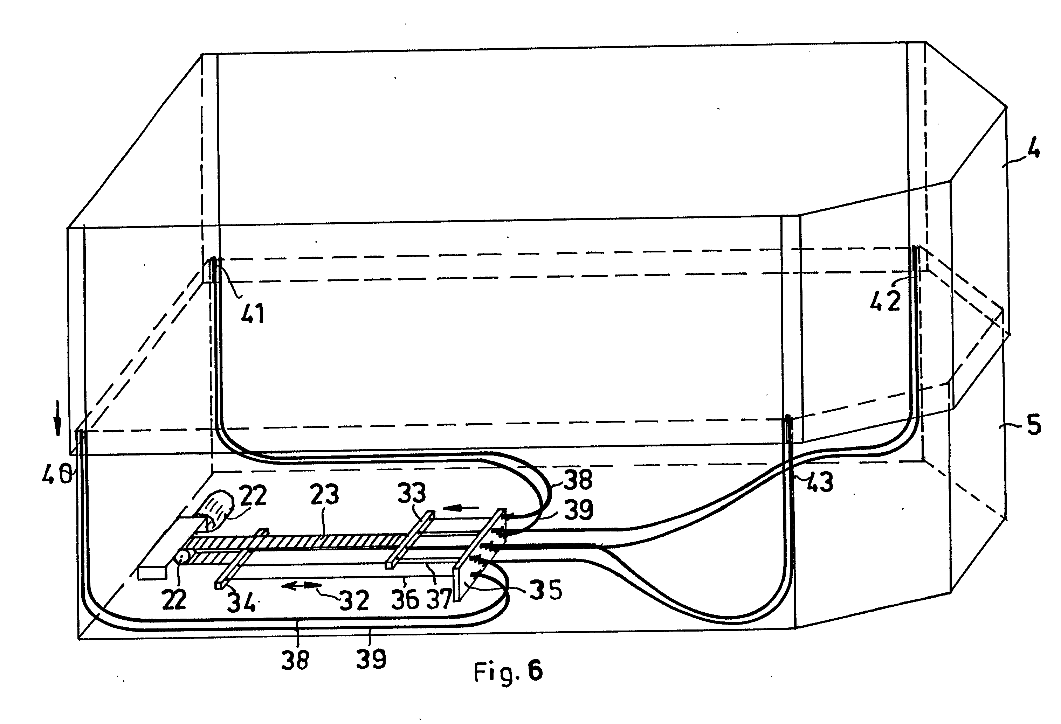

Die Hebeeinrichtung gemäß Fig. 6 besteht im wesentlichen aus einer am oder unter dem Boden des unteren Karosserieteiles 5 angeordneten und gespannten Kette 23, die von einem Motor 22 mit Antriebsritzel 22′ derart angetrieben wird, daß die Kette innerhalb ihrer Länge in Richtung des Pfeiles 32 hin- und herbewegt werden kann. An den beiden Enden der Kette sind zwei Querträger 33, 34 angeordnet.

In gewissem Abstand von dieser Kettenanordnung ist eine Befestigungsvorrichtung, beispielsweise eine Platte 35, im oder unter dem Boden des Laderaumes fest angeordnet. In dieser Platte 35 sind vier mal zwei Bohrungen vorgesehen, durch welche die Seelen 36 bzw. 37 von je zwei miteinander kooperierenden Bowdenzügen 38, 39 geführt sind, deren Mäntel an der Frontseite der Platte 35 befestigt sind. Jeweils zwei Bowdenzüge 38, 39 führen zu vier Eckpfosten 40, 41, 42, 43 oder sonstigen Versteifungsvorrichtungen in den Karosserieteilen 4, 5.

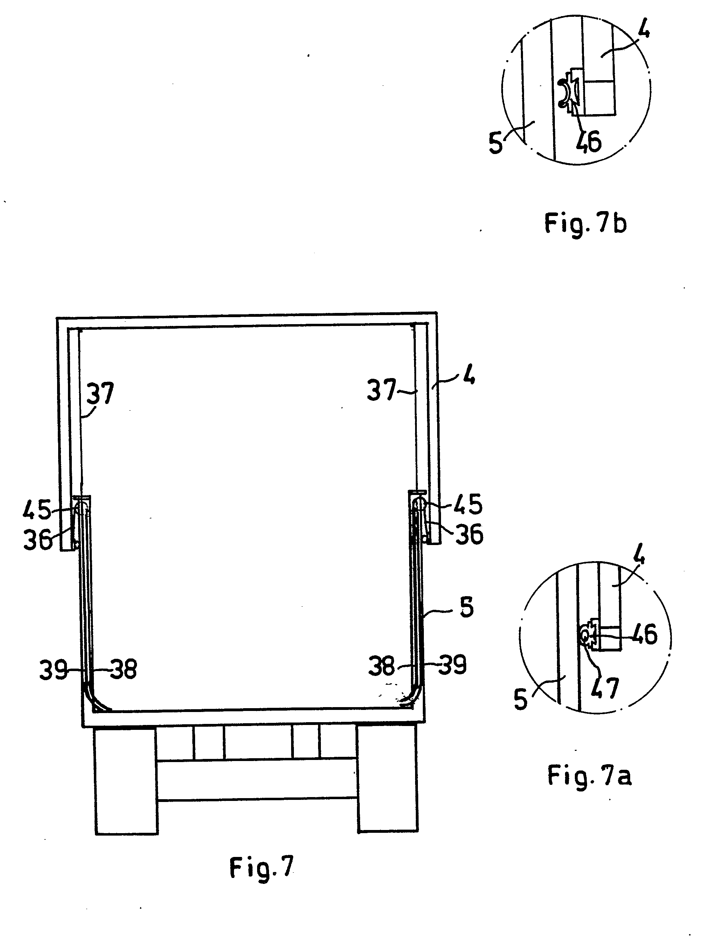

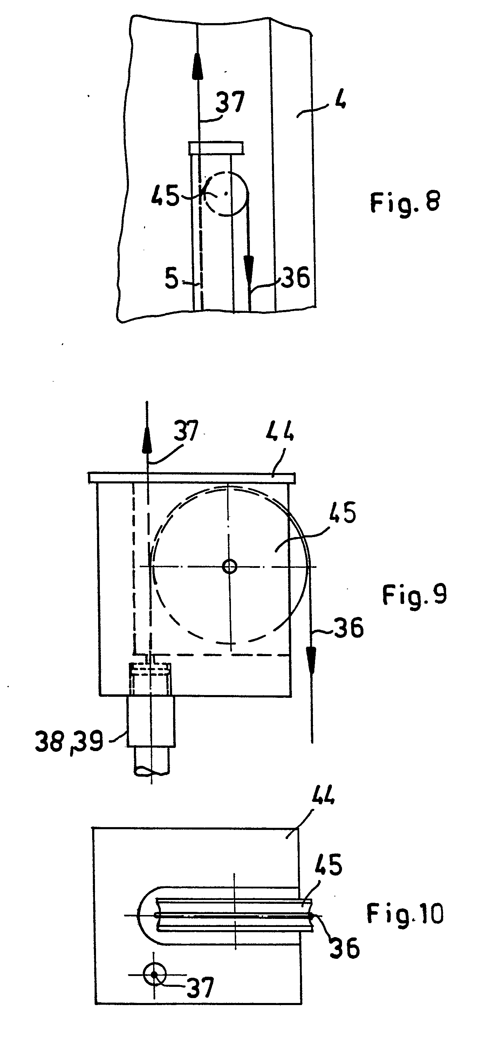

Wie sich aus den Figuren 7, 8, 9 und 10 ergibt, sind je zwei miteinander kooperierende Bowdenzüge 38, 39 an eine Haltevorrichtung 44 für eine Umlenkrolle 45 geführt, die sich im oberen Bereich des unteren Teiles 5 des Karosserieaufbaus befindet. Dabei ist ersichtlich, daß die Seelen 37 der Bowdenzüge 38 nach oben zur Decke des Oberteiles 4 führen. Die Seelen 36 der Bowdenzüge 39 werden über die drehbar gelagerte Umlenkrolle 45 geführt und im Bereich der unteren Kante des anheb- und absenkbaren Oberteiles 5 befestigt. Diese Anordnung ist innerhalb des Karosserieaufbaues vier mal durchgeführt, so daß ein gleichmäßiges Anheben und Absenken erzielt werden kann.

Die Funktion ergibt sich aus den Figuren 6, 7, 8 und 10. Wenn der obere Teil 4 des Karosserieaufbaus abgesenkt werden soll, ist der Motor 22 so geschaltet, daß sich der untere Teil der Kette 23 nach rechts in Richtung des Pfeiles 32 bewegt. Dadurch wird der Querträger 33, der an der Kette 23 befestigt ist, nach links bewegt, und sämtliche Seelen der Bowdenzüge 38 werden ebenfalls nach links bewegt. Dies bedeutet aber, daß die anderen Enden der Seelen 37, die am Dach des Oberteiles 4 befestigt sind, nach unten bewegt werden. Bei der dargestellten Bewegung der Kette 23 wird der Querträger 34 gleichzeitig nach rechts bewegt, wodurch die Seelen 36 der Bowdenzüge 39 mit ihren am im unteren Bereich des Oberteiles 4 befestigten Enden ebenfalls nach unten bewegt werden. Auf diese Weise tritt eine sehr genaue Zwangsführung des Oberteiles 4 nach unten ein. Zum Anheben des Oberteiles 4 wird der Motor 22 umgepolt, so daß nun die Kette in die entgegengesetzte Richtung läuft und der gesamte, oben geschilderte Vorgang in entgegengesetzter Richtung abläuft, bis das Oberteil 4 die höchste oder eine beliebig eingestellte Höhe erreicht hat. Die Einstellung kann dabei beliebig erfolgen, je nachdem, wieviel Ladung sich im Raum des Karosserieaufbaus befindet.

Die Figuren 7a und 7b zeigen noch gesonderte Dichtungen, die im unteren Bereich innen an dem Oberteil 4 angeordnet sind.

Wie aus Fig. 7a ersichtlich, bestehen die Dichtungen 46 aus Gummihohlprofilen mit einem Hohlraum 47. Im Normalzustand, d. h. wenn keine Bewegung des Oberteiles gegenüber dem Unterteil 5 erfolgt, ist dieser Hohlraum mit Luft beaufschlagt, wodurch die Dichtung zwischen den beiden Teilen 4 und 5 gewährleistet ist.

Während der Bewegung wird, wie in Fig. 7b dargestellt, die Luft aus dem Hohlraum 47 entfernt, so daß die Dichtung nun nicht mehr am Unterteil 5 anliegt. Auf diese Weise kann eine in bezug auf die Reibung der beiden Teile gegeneinander reibungsfreie Bewegung während des Anhebens oder Absenkens erzielt werden. Im Endzustand, d. h. wenn das Oberteil 4 die eingestellte Höhe erreicht hat, wird das Gummiprofil wieder belüftet, so daß ein Zustand, wie er in Fig. 7a gezeigt ist, wieder hergestellt wird. Dadurch legt sich die Dichtung wieder an die Wand des Unterteiles 5 an, wodurch wieder eine einwandfreie Dichtung gewährleistet ist.

## Ansprüche

1. Karosserieanordnung für ein Kraftfahrzeug oder einen Anhänger, wie z. B. für einen LKW, einen Transporter, einen Sattelschlepper, einen PKW, einen Container od. dgl., bestehend aus einem im wesentlichen rechteckförmigen Aufbau mit zwei Seitenwänden, zwei Stirnwänden, von denen eine aus zwei Türen bestehen kann, und einem Dach, wobei der den Transport- oder Laderaum umschließende bzw. bestimmende Aufbau im nicht- oder teilbeladenen Zustand des Fahrzeuges zur Verkleinerung seiner Höhe horizontal und zweiteilig und schachtelförmig derart ausgebildet ist, daß der obere Teil über oder in den unteren Teil mittels einer aus Seilzügen bestehenden Hebeeinrichtung teleskopartig absenk- und anhebbar ist, **dadurch gekennzeichnet,** daß vorzugsweise im unteren Teil (5) des Aufbaus (3) zum Anheben und Absenken des oberen Teiles (4) ein Motor mit Getriebe (22) angeordnet ist, der über ein Zahnrad eine Kette (23) in zwei Richtungen antreibt, wobei die Enden der Kette mit Seilzügen (24, 25, 27, 28) verbunden sind, die über Umlenkrollen mit dem oberen Teil (4) an der Decke und an den unteren Kanten verbunden sind, wobei im Bereich der unteren Kanten des oberen Teiles (4) nach innen gerichtete, veränderbare Abdichtungen (20) vorgesehen sind.

2. Karosserieanordnung nach Anspruch 1, **dadurch gekennzeichnet,** daß zwei Türen der hinteren Stirnwand des Aufbaus entsprechend in obere (8) und untere Flügel (9) unterteilt sind und an seitlichen Führungen (14) die oberen Flügel (8) über oder hinter die Flügel (9) absenkbar sind, wobei jeder Flügel (8, 9) zwei Scharniere aufweist, wobei zum ungehinderten Absenken oder Anheben der oberen Flügel (8) das untere Scharnier (12) des oberen Flügels (8) unter dem oberen Scharnier (13) des unteren Flügels (9) angeordnet ist und jeweils zwei gegenüberliegende Flügel durch eine Führungsschiene miteinander verbunden sind.

3. Karosserieanordnung nach Anspruch 1, **dadurch gekennzeichnet,** daß an den Enden der Ketten (23) des Kettenantriebes Bowdenzüge (38, 39) angeordnet sind, die zu vier Eckpfosten oder anderen Versteifungseinrichtungen des Karosserieaufbaus führen, wobei die Seele (37) jeweils eines Bowdenzuges (38) nach oben zur Befestigung im Deckenbereich des Oberteiles (4) geführt ist und die Seele (36) des anderen Bowdenzuges (39) über je eine Umlenkrolle im unteren Bereich des oberen Teiles (4) befestigt ist.

4. Karosserieanordnung nach Anspruch 3, **dadurch gekennzeichnet,** daß an einer Befestigungsvorrichtung, beispielsweise einer Platte (35) im oder unter dem Boden des Laderaumes, die Mäntel von vier mal zwei Bowdenzügen (38, 39) befestigt sind, deren Seelen (36, 37) acht in der Platte (35) vorgesehene Bohrungen durchdringen, wobei die Enden der Seelen (36, 37) von je zwei miteinander arbeitenden Bowdenzügen (38, 39) an je einem Querträger (33, 34) befestigt sind, welche an den Enden der motorisch angetriebenen und über ein Ritzel (22') umgelenkten Kette (23) befestigt sind.

5. Karosserieanordnung nach Anspruch 4, **dadurch gekennzeichnet,** daß die anderen Enden der Bowdenzüge (38, 39) zu einer Befestigungsvorrichtung (44) mit einer Umlenkrolle (45) an den oberen Kanten des Unterteiles (5) geführt sind, wobei jeweils eine Seele (37) an der Decke und eine Seele (36) über die Umlenkrolle (45) an der unteren Kante des Oberteiles (4) befestigt ist.

6. Karosserieanordnung nach Anspruch 1, **dadurch gekennzeichnet,** daß im Bereich der unteren Kante des Oberteiles (4) nach innen gerichtete Gummidichtungen (46) vorgesehen sind, aus deren Hohlraum (47) die Luft evakuiert werden kann, so daß beim Absenken oder Anheben des Oberteiles (4) gegenüber dem Teil (5) keine Reibung zwischen der Dichtung und der Außenwand des Unterteiles (5) auftritt.

Fig.1a

4
1

Fig.1b

4
5
1

Fig.1c

16  19  18  4  3
17
2
1

Fig.1d

19  18
16  3
17  4
2  6
5
1

Fig.1e

16  4  3
2
1

Fig.1f

3
16  4
6  5
1

Fig. 2a

Fig. 2b

EP 0 359 910 A2

Fig. 3a

Fig. 3b

Fig. 3c

Fig. 4c

4

Fig. 4a

Fig.4b

EP 0 359 910 A2

Fig. 5a

EP 0 359 910 A2

Fig. 5b

Fig. 6

Fig. 7b

Fig. 7

Fig. 7a

Fig. 8

Fig. 9

Fig. 10